Europäisches Patentamt

European Patent Office

Office européen des brevets

(11) Publication number: **0 107 186**
A1

# EUROPEAN PATENT APPLICATION

(21) Application number: 83110521.8

(51) Int. Cl.³: **F 16 K 39/04**

(22) Date of filing: 21.10.83

(30) Priority: 22.10.82 US 436100

(71) Applicant: FMC CORPORATION, 200 E. Randolph Drive, Chicago Illinois 60601 (US)

(43) Date of publication of application: 02.05.84 Bulletin 84/18

(72) Inventor: Campbell, Robert Angus, 10403 Golden Valley Drive, Houston Texas 77064 (US)

(74) Representative: Bardehle, Heinz, Dipl.-Ing. et al, Patent- und Rechtsanwälte Bardehle-Pagenberg-Dost-Altenburg & Partner Postfach 86 06 20, D-8000 München 86 (DE)

(84) Designated Contracting States: DE FR GB IT NL

(54) **Gate valve with dual backseat.**

(57) A gate valve with a balance stem (28) that can be back-seated in metal-to-metal contact (54, 56) with the valve body regardless of the location of the gate (22) in its travel between open and closed positions. The valve includes a bonnet stem seat that can be backseated on the bonnet, and both balance and bonnet stems can be backseated at the same time to facilitate safely servicing their primary seals without depressurizing the valve body.

0107186

October 21, 1983
F 4975-EP

FMC CORPORATION

## GATE VALVE WITH DUAL BACKSEAT

### Background of the Invention

This invention relates to valves, and more particularly to gate valves with backseating features.

The prior art relevant to gate valves includes many patents and other literature describing various arrangements for providing an auxiliary or backup seating system, commonly referred to as a backseat, that is employed to selectively establish a fluid-tight seal between the valve's stem and its bonnet or other body element when the primary seal has failed. Although several of those systems function satisfactorily, none are known that facilitate simultaneously backseating both the bonnet stem and the balance stem. Accordingly, in the event of leakage of the bonnet stem packings and the balance stem packings, total leak isolation by backseating both stems at the same time is impossible, thereby presenting a safety hazard during repair of the valve.

### Summary of the Invention

The present invention solves the foregoing and other problems by providing a stem-operated valve having a system that facilitates backseating both the bonnet stem and the balance stem to establish a co-existing fluid-tight seal at both stems, thereby enabling safe repair and/or replacement of the primary stem seals while the valve body cavity remains under pressure. The invention enables the bonnet stem seat and the balance stem seat to be engaged with their backseats at the same time, and provides independent control and operation of the backseating mechanisms. In addition, the seals produced by backseating the balance stem and the bonnet stem in accordance with the present invention re enhanced by a mechanical force, and do not depend upon fluid pressure in the valve body cavity to effect their fluid-tight condition.

These advantages of the present invention are provided through the use of a two-element attached to the valve gate, and an internally threaded sleeve-like outer element that surrounds the inner element and that includes an external annular shoulder-like seat. The two elements of the balance stem move axially in unison with the gate as the gate travels between its open and closed positions, and the stem's outer element is rotated with respect to the gate and the stem's inner element to establish fluid-tight contact with a backseat on the valve body element into which the balance stem extends. Once both the bonnet stem and the balance stem have been backseated, the packings providing the primary seals of both stems can be repaired or replaced without taking the valve out of service.

Brief Description of the Drawings

Figure 1 is a side elevation, partially in central section, of a gate valve embodying the present invention, showing to the left of the center line the valve gate in open position, and to the right of the center line the gate in closed position with the bonnet and balance stems backseated.

Figure 2 is an enlarged fragmentary view of the lower portion of the valve shown in Figure 1, with the gate in open position and the balance stem not backseated.

Figure 3 is an enlarged fragmentary view of the upper portion of the valve of Figure 1, with the gate in open position and the bonnet stem not backseated.

Figure 4 and 5 correspond to Figures 2 and 3, respectively, but illustrate the valve gate in closed position and both bonnet and balance stems backseated.

Description of the Preferred Embodiment

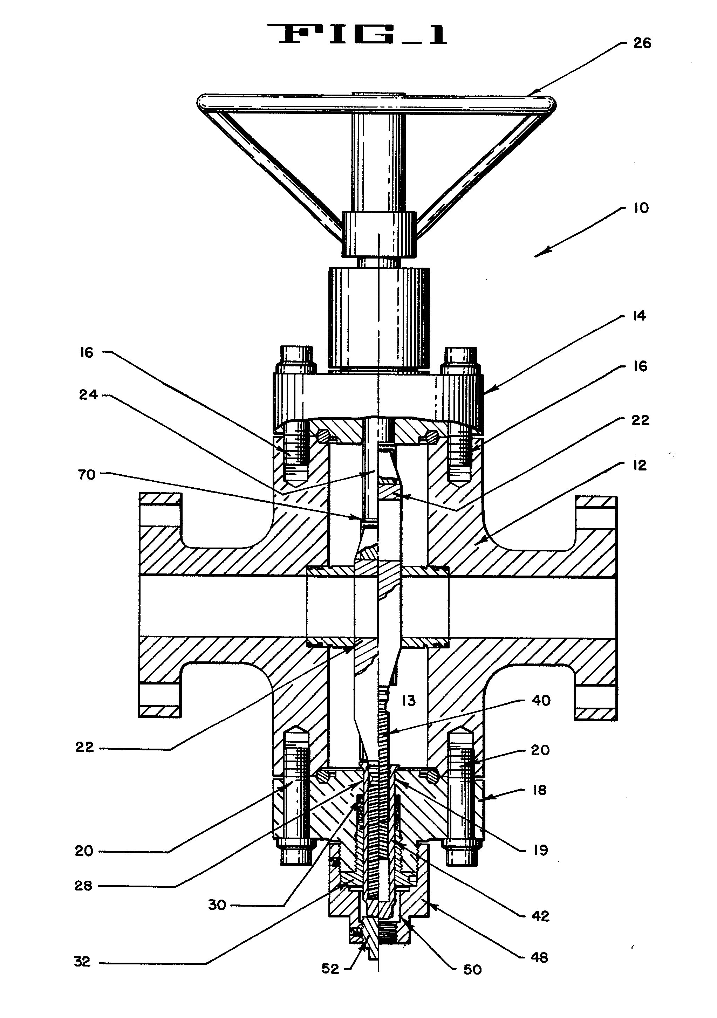

In reference first to Figure 1, a typical gate valve 10 incorporating the features of the present invention comprises a valve body 12 with a cavity 13, a bonnet 14 with a bore 15, cap screws 16 that secure the bonnet 14 to the body 12, a body closure element 18, with a bore 91 and likewise secured to the body 12 by cap screws 20, a valve gate 22, a bonnet stem 24 connected to the upper end of the gate 22 and extending upwardly through the bore 15 of the bonnet 14, a hand wheel 26 for moving the stem 24 and gate 22 between the valve's open and closed conditions (left and right of the centerline, respectively), and a balance stem assembly 28 connected to the lower end of the gate 22 and extending downwardly through the bore 19 in the closure element 18. Surrounding the balance stem assembly 28 is a stem packing 30 that provides a primary seal between this assembly and the closure element 18, and a gland nut 32 that is threaded into the closure element 18 provides a means for compressing the packing 30 into fluid-tight contact with the bore 19 of the element 18 and the balance stem assembly 28. Although not shown, the bonnet stem 24 is sealed in a conventional manner to the bonnet 14 by any of several well-known means, including for example a packing similar to the packing 30.

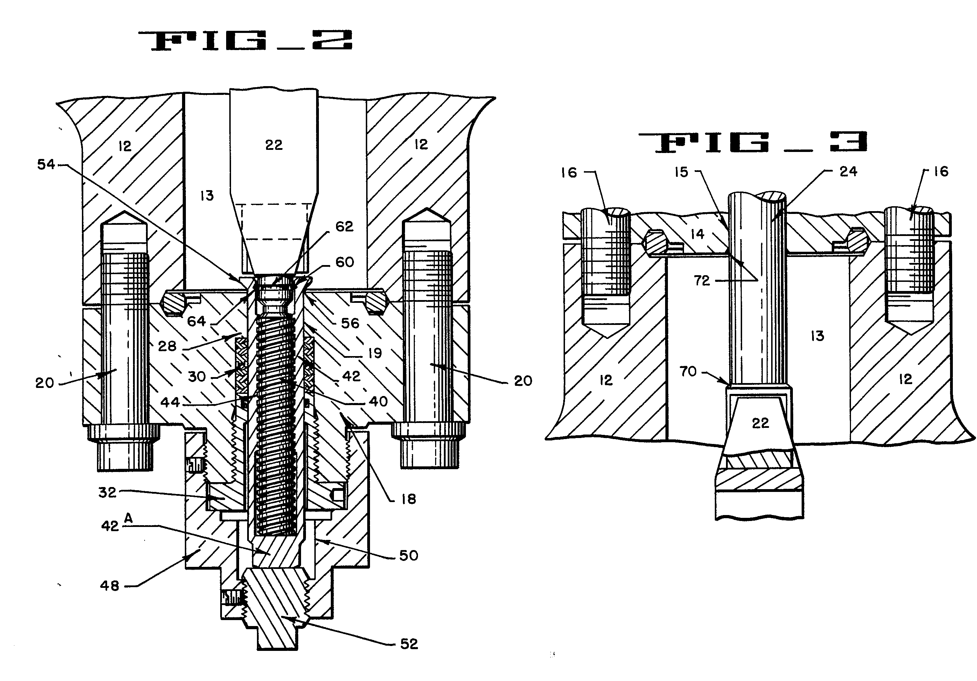

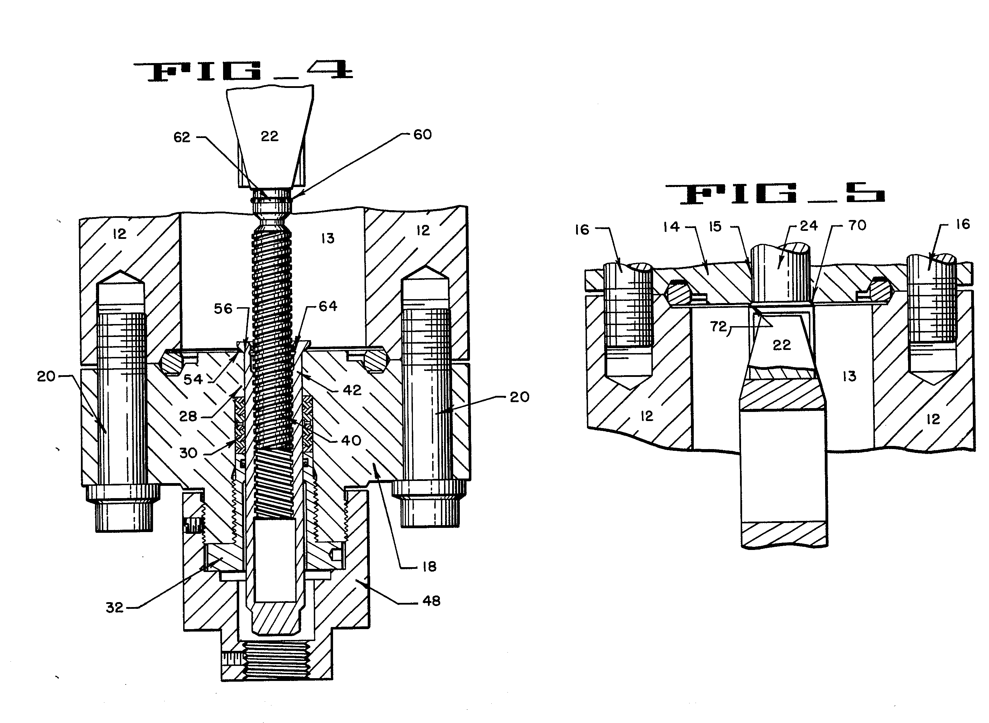

As seen best in Figures 2 and 4, the balance stem assembly 28 comprises an externally threaded rod-like inner element 40 that is suitably secured to the lower end of the valve gate 22, and an internally threaded sleeve-like outer element 42 that surrounds and is rotatably fastened to the inner element 40 by threads 44. The lower end of the outer element 42 is closed and terminates in a hexagonal shaped extension 42a that provides a means to rotate the element 42 with respect to the inner element 40 by threads 44. The lower end of the outer element 42 is closed and terminates in a hexagonal shaped extension 42a that provides a means to rotate the element 42 with respect to the inner element 40 and the closure element 18, which element 18 functions also as a body or housing for the balance stem assembly 28.

Threaded onto the lower end of the closure element 18 is a cap 48 with a bore 50 into which the lower

0107186

end of the balance stem assembly 28 extends. A plug-like stop element 52 is threaded into the lower end of the bore 50 and thus is longitudinally adjustable with respect to the cap 48. By axially varying the location of the stop element 52 with respect to the cap 48 the stroking distance of the valve gate 22 can be controlled, thereby providing an easy means of swabbing adjustment for the valve.

The upper end of the outer element 42 of the balance stem assembly 28 includes an annular shoulder-like seat 54 that extends upwardly and outwardly from the external surface of the element 42. Around the upper end of the bore 19 in the closure element 18 is an annular backseat 56 against which the balance stem seat 54 rests when the balance stem assembly 28 is backseated. The seat 54 and the backseat 56 cooperate to provide a metal-to-metal seal that prevents escape of fluid (gas or liquid) from the valve's body cavity 13 into the bore 19, thereby facilitating safe removal of the cap 48, the gland nut 32 and the packing 30 to repair or replace the packing while the body cavity is pressurized.

As seen best in Figure 2, when the balance stem assembly 28 is not backseated on the closure element 18, such as during normal operation of the valve, the outer and inner balance stem elements 42, 40 are releasably secured together against relative longitudinal movement by a snap ring or other resilient element 60 that resides in an outer annular groove 62 on the inner element 40, and that engages an inner annular groove 64 of V-shaped cross-section near the upper end of the outer element 42. When the outer element 42 is rotated with respect to the inner element 40 to move the outer element towards its backseated position, the snap ring 60 is cammed into a contracted condition by the sloping side of the groove 64, thereby releasing the outer element 42 from the inner element 40 and facilitating longitudinal movement of the element 42 with respect to the element 40.

-5-    0107186

The bonnet stem 24 has a downwardly and outwardly extending shoulder-like annular seat 70 near the connection of the stem 24 with the valve gate 22. As seen best in Figures 3 and 5, the lower end of the bore 15 in the bonnet 14 is chambered to provide an annular backseat 72 against which the seat 70 rests when the bonnet stem is backseated (Figure 5). In the backseated condition the seat 70 and the backseat 72 cooperate to provide a metal-to-metal fluid-tight seal between the valve body cavity 13 and the bore 15, thereby facilitating safe servicing of the bonnet stem packing (not shown) while the valve remains under pressure.

Operation

In normal valve operation, the outer element 42 of the balance stem assembly 28 is positioned relative to the inner element 40 by means of the threads 44 to assure that as the gate 22 is moved through its normal range of travel there is no contact between the balance stem seal 54 and the backseat 56 on the closure element 18. In this condition, the packing 30 prevents escaping of gas or liquid from the body cavity 13.

When it is desired to backseat the balance stem, for example when preparing to service the packing 30, the stop element 52 is removed from the cap 48 and the outer element 42 of the balance stem assembly 28 is rotated, such as by means of a mating socket wrench fitted over the hex extension 42a, until the seat 54 comes to rest against the backseat 56. Since the inner element 40 of the balance stem assembly 28 cannot move upwardly without rotating the handwheel 26, the seat 54 can be mechanically forced into the desired metal-to-metal fluid-tight sealing contact with the closure element backseat 56, and of course maintained in such contact, without reliance on the pressure within the valve cavity 13. It should be noted that the balance stem assembly 28 can be backseated regardless of the position of the valve gate 22, so that the packing 30 can be serviced even when the valve is fully open (left side of Figure 1 Centerline).

When both the bonnet stem and the balance stem are to be backseated, the handwheel 26 is rotated until the bonnet stem seat 70 comes to rest against the backseat 72, and the outer element 42 of the balance stem assembly then is rotated to bring the seat 54 into contact with the backseat 56. By torquing the outer element 42 the bonnet and balance stem seats 70, 54 can be mechanically pressurized into fluid-tight cooperation with their backseat 72, 56 respectfully, and this mechanical force will maintain the integrity of the seals so established even if the body cavity 13 is depressurized. Since fluid pressure in the cavity 13 therefore is not required, the bonnet packing also can be serviced while the valve is under line pressure.

Although the best mode contemplated for carrying out the present invention has been herein shown and described, it will be apparent that modification and variation may be made without departing from what is regarded to be the subject matter of the invention.

CLAIMS

1.    A fluid control valve comprising; a) a valve body with a body cavity; b) a bonnet mounted on said valve body; c) a valve closure element within said body cavity; d) a bonnet stem connected to said closure element and extending into said valve bonnet; e) a balance stem assembly connected to said closure element and extending into said valve body; f) a seat on said balance stem assembly; g) means for moving said seat with respect to said closure element into fluid-tight contact with said valve body; and h) means for mechanically maintaining said fluid-tight contact of said seat and said valve body during valve servicing operations.

2.    A fluid control valve according to Claim 1 wherein said balance stem assembly comprises an inner rod-like element connected to said valve closure element, and an outer sleeve-like element surrounding and threadedly engaging said inner element.

3.    A fluid control valve according to Claim 2 wherein said balance stem assembly seat comprises an annular shoulder on said assembly outer element.

4.    A fluid control valve according to Claim 3 wherein said annular shoulder is metal and cooperates with said valve body to establish a metal-to-metal seal between said outer element and said body.

5.    A fluid control valve according to Claim 1 including backseat means on said valve body to cooperate with said balance stem assembly seat in establishing a backseated condition of said assembly.

6.    A fluid control valve according to Claim 5 including a seat on said bonnet stem, backseat means on said bonnet, and means to move said bonnet stem seat into fluid-tight relationship with said backseat.

7.    A fluid control valve according to Claim 1 including primary balance stem seal means between said balance stem assembly and said valve body, and means facilitating access to said primary seal means for servicing said seal means while said balance stem assembly seat is in fluid-tight contact with said valve body.

8. A fluid control valve according to Claim 1 including a seat on said bonnet stem, backseat means on said bonnet, and means for moving said bonnet stem seat into fluid-tight contact with said backseat means.

9. A fluid control valve according to Claim 8 wherein said bonnet stem and said balance stem assembly can be backseated into fluid-tight contact with said bonnet and said valve body, respectively, at the same time.

10. A fluid control valve according to Claim 1 wherein said balance stem assembly seat moving means comprises threads which are functional to move said seat regardless of the location of said valve closure element in its path of travel between open and closed positions.

1/3

FIG_1

# FIG_2

12   22   12

54

13

62

60

64

56

28   19

30   42

44   40

20   20

18

32

42 A

48

50

52

# FIG_3

16   15   24   16

14

72

13

12   12

70

22

2/3

0107186

FIG_4

FIG_5

0107186

0107186

European Patent Office

**EUROPEAN SEARCH REPORT**

Application number

EP 83 11 0521

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-C-1 164 180 (GROVE VALVE AND REGULATOR) <br> * Figures 2, 3 * | 1-5 | F 16 K 39/04 |
| A | US-A-4 230 299 (PIERCE) <br><br> * Figure 4 * | 3-5,7, 8 | |
| A | US-A-4 281 819 (LINDER) | | |
| A | DE-A-2 734 794 (McEVOY OILFIELD EQUIPMENT) | | |
| A | GB-A-1 256 585 (KAHN) <br><br> ----- | | |

TECHNICAL FIELDS SEARCHED (Int. Cl. 3)

F 16 K 39/00
F 16 K 41/00

The present search report has been drawn up for all claims

| Place of search | Date of completion of the search | Examiner |
|---|---|---|
| BERLIN | 11-01-1984 | SCHLABBACH M |

EPO Form 1503. 03.82